# EUROPEAN PATENT SPECIFICATION

(11) **EP 3 715 247 B1**
(45) Date of publication and mention of the grant of the patent: **02.03.2022**
(21) Application number: 20166094.1
(22) Date of filing: 26.03.2020
(51) Int. Cl.: B64C 27/00, F16F 1/38, F16F 1/387

(54) **A SHOCK-ABSORBING SUPPORT FOR DAMPING VIBRATIONS IN HELICOPTERS AS WELL AS VIBRATION DAMPING SYSTEM WITH SUCH SUPPORT**
STOSSDÄMPFENDE LAGERUNG ZUR DÄMPFUNG VON SCHWINGUNGEN IN HUBSCHRAUBERN UND SCHWINGUNGSDÄMPFUNGSSYSTEM MIT EINER SOLCHEN LAGERUNG
SUPPORT AMORTISSEUR POUR L'AMORTISSEMENT DES VIBRATIONS DE HÉLICOPTÈRES ET SYSTÈME D'AMORTISSEMENT DES VIBRATIONS AVEC UN TEL SUPPORT

(30) Priority: 26.03.2019 IT 201900004353
(43) Date of publication of application: 30.09.2020
(73) Proprietor: Lamanna Helicopter S.r.l., 35137 Padova (IT)
(72) Inventor: LAMANNA, Roberto, 36040 Grumolo delle Abbadesse (VI) (IT)
(74) Representative: Maroscia, Antonio

(56) References cited:
- CN-A- 102 829 113
- JP-A- H05 126 185
- JP-A- 2001 173 699
- JP-A- 2014 122 661
- US-A- 5 489 087
- US-A- 5 788 182
- US-B2- 7 357 379

## Description

### Technical Field

The present invention generally finds application in the field of rotary wing aircrafts, and particularly relates to a shock-absorbing support for damping vibrations between the rotor of a helicopter and its frame.

The invention also relates to a system for damping vibrations between the rotor and the frame of a helicopter.

### Background art

Vibrations are known to be the main design concern in a helicopter. The vibrations generated in the helicopter during the flight have different sources and are transferred to both the mechanical parts of the helicopter and its crew.

Such vibrations comprise vertical and lateral components that cannot be eliminated by either aerodynamic or physical means, because they are generated by mass imbalances that are transferred from the rotor to the frame via the mechanical transmission that connects the engine to the rotor.

The vibrations stress the transmission in three directions, i.e. the upward, lateral and longitudinal directions and depend on the speed of travel of the aircraft, its weight and the type of maneuver.

When considering only the longitudinal and transverse forces, such forces stress the rotor shaft with respect to its axis of rotation with pulsed cyclically opposite loads in the longitudinal and transverse directions.

In order to damp such vibrations the degree of freedom of the rotor shaft must be increased, but within certain limits as the aircraft must maintain pre-determined attitude angles required for the flight. The axes along which flight attitude must be kept unchanged are the longitudinal axis and the transverse axis, the former ensuring maintenance of the center of gravity and roll control, the latter ensuring limitation of rotations about the transverse axis and pitch control.

Therefore, vibration damping and limitation of the degree of freedom of the rotor shaft must be very little along the longitudinal and transverse axes and increase in the intermediate directions between the first two axes.

As a rule, for vibration damping, the main rotor and/or the tail rotor of the helicopter are secured to the frame with the interposition of hydraulic vibration-damping devices, with hinges and elastic members designed to impart a predetermined degree of freedom to the rotors, to limit vibration transfer to the helicopter frame as disclosed in US5489087 and CN102829113.

Nevertheless, such vibration-damping devices are very complex and do not afford variations in direction and intensity of the degree of freedom of the rotor.

Moreover, the installation of these devices requires the use of skilled labor to perform the delicate preliminary operations for positioning and centering the device on the frame and the rotor on the device.

Another important drawback is that these devices have heavy weights and are difficult to install on ultralight helicopters.

In an attempt to at least partially obviate these drawbacks, shock-absorbing support devices have been developed for damping vibrations between the rotor of a helicopter and its frame, which comprise elastic means for reducing wear issues and hence maintenance costs for the device.

US5788182 discloses a bidirectional suspension system for connecting a helicopter rotor to the frame. The system uses connecting rods articulated to lateral supports and a system of transverse levers connected to the frame about axes substantially parallel to the axis of the rotor. The levers are equipped with an elastic connection which consists of a single central bearing made of an elastomeric material, connected to both side levers.

WO2015128595 discloses a torque vibration damping device generated by the tail rotor of a helicopter comprising an outer casing mounted to the hub of the rotor via a pair of fixed arms and corresponding holes which are adapted to receive a pin designed to prevent rotation of the casing about the rotor hub.

US7357379 discloses a vibration-damping support which comprises many of the main features of the preamble of claim 1 and is able to vary the elastic properties of the support having stresses applied thereto in two mutually orthogonal directions. However, this support provides effective reduction of the elastic torque resistance but cannot differentiate the elastic constant of the support along the aforementioned mutually orthogonal directions.

### Technical Problem

In view of the prior art, the technical problem addressed by the present invention is to increase the degree of freedom of the rotor of a helicopter while maintaining elastic properties unchanged in the transverse and longitudinal directions of the aircraft.

### Disclosure of the invention

The object of the present invention is to obviate the above drawback, by providing a shock-absorbing support for damping vibrations between the rotor of a helicopter and its frame and a vibration damping system that are highly efficient and relatively cost-effective.

A particular object of the present invention is to provide a vibration damping support of the aforementioned type that can increase the freedom of movement of the rotor and absorb substantially longitudinal, transverse and torsional stresses of the helicopter.

A further object of the present invention is to provide a vibration damping system of the aforementioned type that can absorb stresses both parallel and orthogonal to the axis of the helicopter rotor.

These and other objects, as more clearly explained hereafter, are fulfilled by a shock-absorbing support for damping vibrations between the rotor of a helicopter and its frame as defined in claim 1.

According to claim 11, there is provided a system for damping vibrations between the rotor and the frame of a helicopter, having at least one pair of vibration damping supports of the aforementioned type to connect first rods to the rotor transmission so that the second diametrical planes of the supports will be substantially parallel to the longitudinal axis and to the transverse axis of the frame respectively, thereby damping substantially longitudinal, transverse and torsional stresses acting on the helicopter.

Thanks to this combination of features, the vibrations produced by the rotor may be effectively reduced while increasing the flight comfort for the crew and keeping aircraft control substantially unchanged during the flight.

Advantageous embodiments of the invention are obtained in accordance with the dependent claims.

### Brief description of the drawings

Further features and advantages of the invention will be more apparent from the detailed description of a preferred, non-exclusive embodiment of a vibration damping support and a damping system, which are described as a non-limiting example with the help of the annexed drawings, in which:
FIG. 1 is a schematic perspective view of a helicopter having a vibration damping support and a vibration damping system of the invention;
FIG. 2 is an enlarged perspective view of the vibration damping system of the helicopter of FIG. 1;
FIG. 3 is an enlarged perspective view of a detail of FIG. 2;
FIG. 4 is a rear view of a detail of FIG. 2 as taken along the arrow XI of the figure;
FIG. 5 is a general perspective view of a vibration damping support of the invention;
FIG. 6 is an exploded perspective view of one embodiment of the support of
FIG. 5;

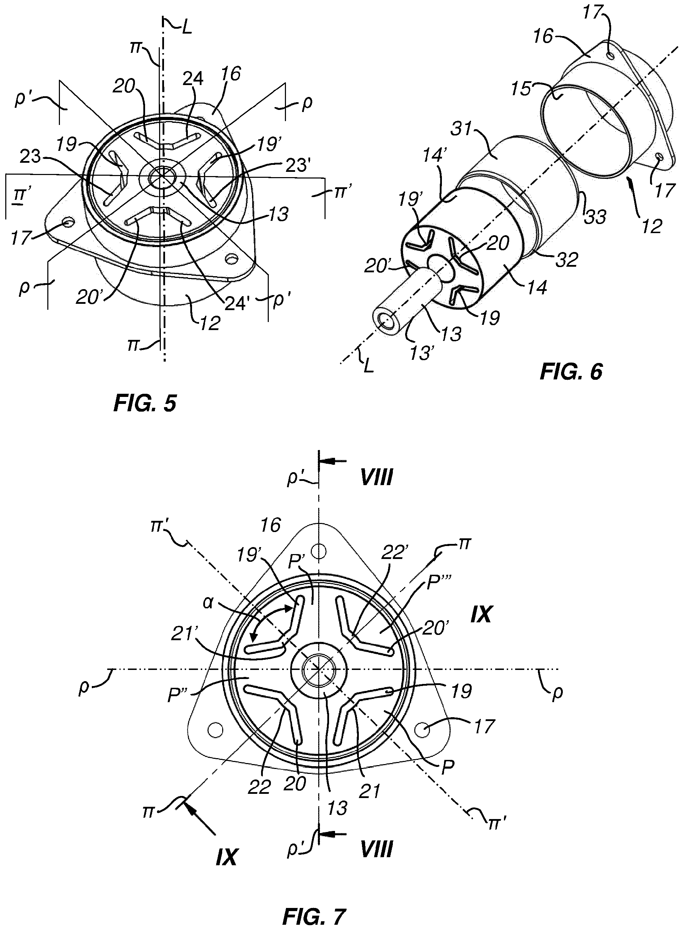

FIG. 7 is a front view of the support of FIG. 5;

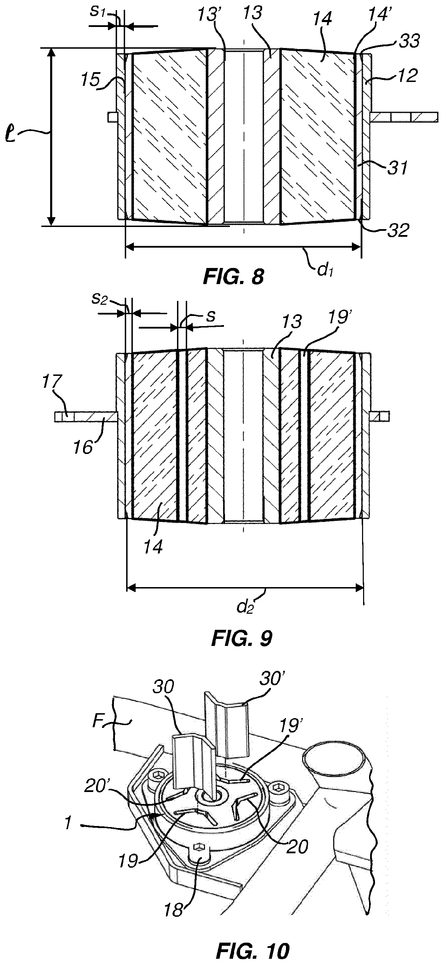

FIG. 8 is a sectional view of the support of FIG. 5, as taken along a plane VII-VII of FIG. 6;
FIG. 9 is a sectional view of the support of FIG. 5, as taken along a plane VIII-VIII of FIG. 6;
FIG. 10 is a perspective view of one embodiment of the support of FIG. 5;

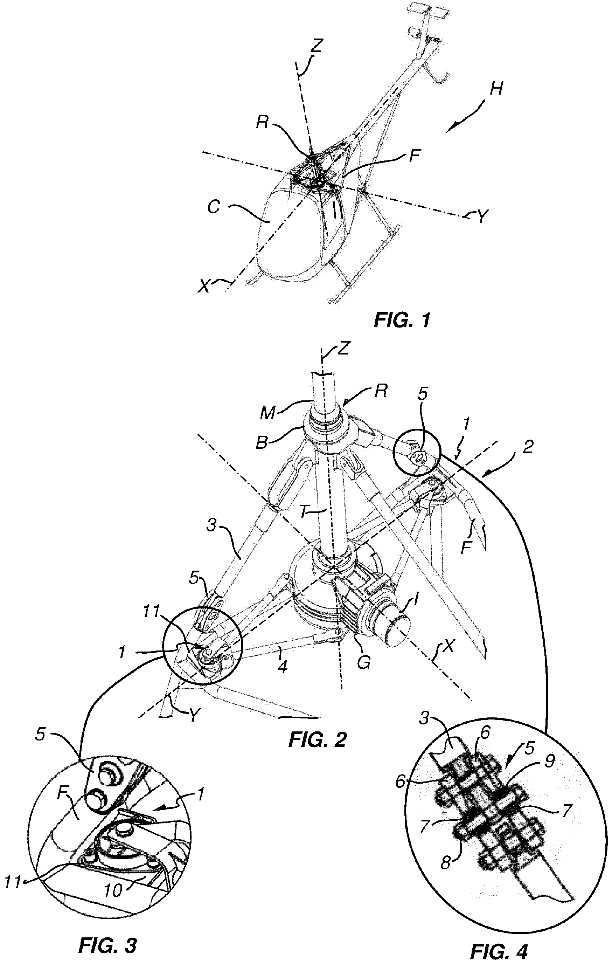

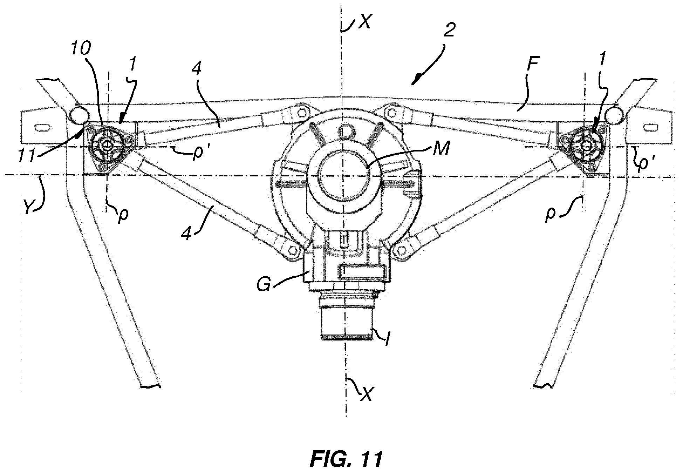

FIG. 11 is a perspective view of the vibration damping system of the helicopter of FIG. 2.

### Detailed description of preferred embodiments

Particularly referring to the above figures, there are shown a vibration damping support and a vibration damping system for damping vibrations transferred between the rotor of a helicopter and its frame.

FIG. 1 schematically shows a helicopter, generally referenced H, which comprises a frame F defining a longitudinal axis X and a transverse axis Y and an airframe C enclosing the frame F.

The helicopter H comprises a rotor R which in turn comprises a rotor mast M rotating about an axis Z approximately perpendicular to the axes X and Y and having two or more blades, not shown in FIG. 1 for sake of clarity.

The mast M is protected by a tubular casing T and is supported by an upper support B which also contains the stationary part of the swashplate. The mast M is rotated by an engine, also not shown, via a transmission G having a power input I.

A system 2 is provided in the upper part of the frame F for damping vibrations between the rotor R and the frame F, which system 2 comprises a lattice structure composed of a plurality of support bars 3 inclined with respect to the axis with upper ends connected to the support B and pairs of rods 4 with outer ends connected to the frame F and with inner ends connected to the protection casing of the transmission G.

The support bars 3 are connected to the frame F via flexible connectors 5 as described in the utility model VI2013U000026 by the Applicant hereof and schematically shown in FIG. 4.

Each flexible connector 5 is essentially composed of a pair of mutually facing plates 6, that are coupled together with the interposition of a series of bushes 7 made of an elastomeric material by means of screw connection members 8 extending through holes 9 substantially parallel to the longitudinal axis X of the helicopter H.

The pairs of rods 4 have outer ends connected to the frame F via a pair of shock-absorbing supports 1 for damping vibration of the present invention, fixed by means of screw means to metal gusset plates 10 welded to the corners 11 of the lattice structure of the system 2.

In a first embodiment, the support 1 comprises an outer annular body 12 adapted to be secured to the frame F of the helicopter H and defining a central axis L, an inner bush 13 coaxial with the outer annular body 12 and adapted to be secured to the transmission G of the rotor R and a substantially toroidal elastic member 14 interposed between the outer annular body 12 and the inner bush 13.

The toroidal elastic member 14 is made of an elastomeric material having a predetermined elastic constant (or Young's modulus) K defined as the proportionality constant of the Hooke's law.

The elastomeric material of said toroidal elastic member 14 is selected from the group comprising NBR, HNBR and XNBR and is preferably curable, with a Shore A hardness ranging from 70 to 90 and preferably close to 80.

As shown in FIGS. 5 and 6, the outer annular body 12 comprises a substantially cylindrical wall 15 having a predetermined thickness s₁ and an inside diameter d₁.

A radial flange 16 extends from the cylindrical wall 15 and has an approximately triangular or lobed plan shape, having three peripheral holes 17 for receiving screw means 18 for fixation to the gusset plates 10 of the frame F.

Advantageously, the outer annular body 12, the inner bush 13 and the elastic member 14 have substantially the same axial length I.

In all the embodiments, two pairs of recesses or slots, referenced 19, 19' and 20, 20' respectively, are formed in the solid body of the elastic member 14. Such slots 19, 19' and 20, 20' are through slots, i.e. extend throughout the axial length of the elastic member 14 and are substantially parallel to the central axis L.

As clearly shown in FIGS. 5 and 7, the slots 19, 19' and 20, 20' of each pair are diametrically opposite and symmetrical with respect to two first diametrical planes π, π' which intersect at the central axis L.

According to the invention, the first diametrical planes π, π' are orthogonal to each other. Thus, the slots 19, 19', 20, 20' are angularly offset by 90° and equally spaced from each other.

Furthermore, the slots 19, 19'; 20, 20' have the same substantially V-shaped cross section with vertices 21, 21'; 22, 22' radially directed toward the central axis L and passing through the first diametrical planes π, π' and the inclined sections 23, 23', 24, 24'.

Preferably, the slots 19, 19', 20, 20' have a constant thickness s ranging from 1mm to 3mm, preferably of about 2mm.

Thus, the overall elastic constant K of the elastic member 14 decreases along the first diametrical planes π, π' due to the compliance of the elastomeric material at the material voids in the slots.

Conveniently, the opening angle α of the inclined sections 23, 23', 24, 24' is rather large, preferably ranging from 90° to 120°, more preferably close to 100°. Moreover, the vertices 21, 21', 22, 22' are flattened or slightly arched and parallel to the outer surface 13' of the inner bush 13.

Conveniently, the vertices 21, 21', 22, 22' are spaced apart from the outer surface 13' of the inner bush 13 at a constant distance that ranges from 4 mm to 6 mm, and the tops of the inclined sections are spaced apart from the outer surface 14' of the elastic member 14 at a distance that ranges from 2 mm to 3 mm.

Moreover, as best shown in FIG. 6, the slots 19, 19', 20, 20' are in symmetrical positions with respect to second diametrical planes p, p' rotated by about 45° with respect to the first diametrical planes π, π', also orthogonal and intersecting at the central axis L.

Thus, the slots 19, 19', 20, 20' delimit respective substantially radial zones P, P", P", P‴, entirely filled with elastomeric material except the slots, whereat the elastic constant K of the elastic member 14 along the second diametrical planes p, p' is greater than along the first diametrical planes π, π'.

In a second embodiment, at least one pair of elongate inserts 30, 30' are inserted in one of the pairs of diametrically opposite slots, e.g. the slots 19, 19', to increase the hardness and therefore the elastic constant K of the elastic member 14 along one of the first diametrical planes π, π'.

The inserts 30, 30' have a cross section that is substantially complementary to the profile of the slots 19, 19', 20, 20' and are formed with metal materials, such as bronze or steel, or polymeric materials selected from the group including HDPE (high-density polyethylene).

In all embodiments, as shown in FIGS. 5, 7 and 8, a metal sheet casing 31 is fixed around the elastic member 14. The casing 31 has an essentially tubular shape, with an outside diameter d₂ slightly greater than the inside diameter d₁ of the outer annular body 12 and a thickness s₂.

In addition, the casing 31 has respective bevels 32, 33 along its end edges.

Once the elastic member 14 is fixed or cured with the casing 31 and with the inner bush 13, it forms a replacement elastic cartridge which can be replaced and introduced by interference fit into the outer annular body 12 in a relatively easy manner using a press, thanks to the bevels 32, 33 in the casing 31.

Referring to FIGS. 2 and 11 a vibration damping system 2 of the invention is shown.

In this system 2, the rods 4 of the lattice structure are secured to the frame F by means of a pair of shock-absorbing supports 1 as described above.

According to the invention, the shock-absorbing supports 1 are secured to the gusset plates 10 of the frame F using screw means 18, such that the second diametrical planes p, p' will be substantially parallel respectively to the longitudinal axis X and to the transverse axis Y of the frame F, thereby damping substantially longitudinal, transverse and torsional stresses of the helicopter H.

It will be appreciated from the foregoing that the shock-absorbing support 1 for damping vibrations between the rotor R of a helicopter H and the vibration damping system 2 as described above fulfill the intended objects, and are namely able to adequately damp stresses on the helicopter H in the directions parallel to the longitudinal X and transverse Y main axes of the aircraft, thereby providing a greater degree of freedom in the directions between the first two directions and increasing the freedom of movement of the rotor R.

The shock-absorbing support 1 and the vibration damping system 2 of the invention are susceptible to a number of changes or variants.

While the support and system have been described with particular reference to the accompanying figures, the numerals referred to in the disclosure and claims are only used for the sake of a better intelligibility of the invention and shall not be intended to limit the claimed scope in any manner.

Reference herein to "one embodiment" or "the embodiment" or "some embodiments" indicates that a particular features, structure or elements that is being described is included in at least one embodiment of the inventive subject matter.

Furthermore, the particular features, structures or elements may be combined together in any suitable manner to provide one or more embodiments.

### Industrial Applicability

The present invention is industrially applicable, because it can be produced on an industrial scale by mechanical and aircraft and helicopter producing factories.

## Claims

1. A shock-absorbing support (1) for damping vibrations between a rotor (R) of a helicopter (H) and its frame (F), wherein the rotor (R) comprises a rotor mast (M) connected to an engine via a transmission (G), said support (1) comprising:
- an outer annular body (12) defining a central axis (L) and adapted to be secured to the frame (F);
- an inner bush (13) coaxial with said outer annular body (12) and adapted to be secured to the transmission (G) of the rotor (R);
- a substantially toroidal elastic member (14) interposed between said outer annular body (12) and said inner bush (13), said elastic member (14) being made of an elastomeric material having a predetermined elastic constant (K);
wherein said elastic member (14) has two pairs of through slots (19, 19'; 20, 20') substantially parallel to said central axis (L), the slots (19, 19'; 20, 20') of each pair being diametrically opposite and symmetrical with respect to two first diametrical planes (π, π') intersecting at said central axis (L);
wherein said first diametrical planes (π, π') are orthogonal to each other, said slots (19, 19'; 20, 20') having identical cross sections said slots (19, 19'; 20, 20') being in symmetrical positions with respect to second diametrical planes (p, p') intersecting said central axis (L) and rotated by 45° with respect to said first diametrical planes (π, π'), so that the elastic constant (K) of said elastic member (14) along said second diametrical planes (p, p') is higher than along said first diametrical planes (π, π'), **characterized by**:
- said slots having substantially V-shaped cross sections with vertices radially directed toward said central axis (L) and passing through said first diametrical planes (π ,π');
- said elastic member (14) having an outer sheet-like casing (31) and forming with it and with the inner bush (13) a replacement element;
- said casing (31) having an outside diameter (d2) that is slightly greater than the inner diameter (d1) of said outer annular body (12) for interference force-fit therewith.

2. A support as claimed in claim 1, **characterized in that** said outer annular body (12), said inner bush (13) and said elastic member (14) have substantially the same axial length (I).

3. A support as claimed in claim 1, **characterized in that** said outer annular body (12) has a cylindrical wall (15) from which a radial flange (16) extends with holes (17) for fixation to the helicopter frame (F).

4. A support as claimed in claim 1, **characterized in that** said substantially V-shaped axial slots (19, 19'; 20, 20') have a substantially constant thickness (s) ranging from 1mm to 3mm and preferably close to about 2mm.

5. A support as claimed in claim 1, **characterized in that** said slots (19, 19'; 20, 20') have flattened or slightly arched vertices (21, 21'; 22, 22') which are thus parallel to an outer surface (13') of said inner bush (13) and inclined sections (23, 23'; 24, 24') directed outwards with an opening angle (α) ranging from 90° to 120°.

6. A support as claimed in claim 5, **characterized in that** said vertices (21, 21'; 22, 22') are spaced apart from the outer surface (13') of said inner bush (13) at a constant distance that ranges from 4 mm to 6 mm, and said inclined sections are spaced apart from an outer surface (14') of said elastic member (14) at a distance that ranges from 2 mm to 3 mm.

7. A support as claimed in claim 1, **characterized in that** it comprises at least two elongate inserts (30, 30') adapted to be introduced into a pair of said diametrically opposite slots (19, 19'; 20, 20') to increase the elastic constant (K) of said elastic member (14) along one of said first diametrical planes (π, π') passing through the vertices (21, 21'; 22, 22') of the V-shaped profiles of said slots (19, 19'; 20, 20'), said inserts (30, 30') having a cross section that is substantially complementary to the profile of said slots (19, 19'; 20, 20').

8. A support according to claim 7, **characterized in that** the material of said inserts (30, 30') is selected from the group comprising metals or polymeric materials such as HDPE (high-density polyethylene).

9. A support as claimed in one of claims 1 or 5, **characterized in that** the elastomeric material of said elastic member (14) is a curable rubber selected from the group including NBR, HNBR and XNBR, with a Shore A hardness ranging from 70 to 90, preferably close to 80 without said inserts (30, 30') and ranging from 45 to 60, preferably close to 55 with said inserts (30, 30').

10. A support as claimed in claim 1, **characterized in that** said inner bush (13) has an inner cylindrical cavity whose size allows the passage of screw means or the like for connecting said support (1) to the transmission (G) by means of pairs of rods (4).

11. A system (2) for damping vibrations between the rotor (R) and the frame (F) of a helicopter (H), wherein the frame (F) defines a longitudinal axis (X), a transverse axis (Y) and a vertical axis (Z) perpendicular to each other, and wherein the rotor (R) comprises a rotor mast (M) connected to an engine via a transmission (G), said mast (M) being kept coaxial with said vertical axis (Z) by means of an upper support (B) which is secured to the frame (F), said system (2) comprising a lattice structure with substantially horizontal rods (4) for supporting the transmission (G), **characterized in that** it comprises at least one pair of shock-absorbing supports (1) as claimed in one or more of the preceding claims for connecting said rods (4) to the transmission (G) so that the second diametrical planes (p, p') of said supports (1) will be substantially parallel to the longitudinal axis (X) and the transverse axis (Y) of the frame (F) respectively, to thereby damp substantially longitudinal, transverse and torsional stresses of the helicopter (H).

## Patentansprüche

1. Stoßdämpfende Stütze (1) zum Dämpfen von Schwingungen zwischen einem Rotor (R) eines Hubschraubers (H) und seinem Rahmen (F), wobei der Rotor (R) einen Rotormast (M) umfasst, der über ein Getriebe mit einem Motor verbunden ist (G), wobei die Stütze (1) umfasst:
- einen äußeren ringförmigen Körper (12), der eine Mittelachse (L) definiert und dafür ausgelegt ist, an dem Rahmen (F) befestigt zu werden;
- eine innere Buchse (13), die koaxial mit dem äußeren ringförmigen Körper (12) ist und dafür ausgelegt ist, an dem Getriebe (G) des Rotors (R) befestigt zu werden;
- ein im wesentlichen ringförmiges elastisches Element (14), das zwischen dem äußeren ringförmigen Körper (12) und der inneren Buchse (13) angeordnet ist, wobei das elastische Element (14) aus einem Elastomermaterial mit einer vorbestimmten elastischen Konstante (K) hergestellt ist;
wobei das elastische Element (14) zwei Paare von durchgehenden Schlitzen (19, 19'; 20, 20') aufweist, die im Wesentlichen parallel zu der Mittelachse (L) sind, wobei die Schlitze (19, 19'; 20, 20') jedes Paares diametral gegenüberliegend und symmetrisch in Bezug auf zwei erste diametrale Ebenen (π, π') sind, die sich an der Mittelachse (L) schneiden;
wobei die ersten diametralen Ebenen (π, π') orthogonal zueinander sind und die Schlitze (19, 19'; 20, 20') identische Querschnitte haben;
wobei die Schlitze (19, 19'; 20, 20') in symmetrischen Positionen in Bezug auf zweite diametrale Ebenen (p, p') sind, die die Mittelachse (L) schneiden und um 45° in Bezug auf die ersten diametralen Ebenen (π, π') gedreht sind, so dass die elastische Konstante (K) des elastischen Elements (14) entlang der zweiten diametralen Ebenen (p, p') höher ist als entlang der ersten diametralen Ebenen (π, π'), **dadurch gekennzeichnet, dass**:
- die Schlitze im Wesentlichen V-förmige Querschnitte mit Spitzen haben, die radial zu der Mittelachse (L) gerichtet sind und durch die ersten diametralen Ebenen (π, π') verlaufen;
- das elastische Element (14) ein äußeres folienartiges Gehäuse (31) aufweist und mit ihm und mit der inneren Buchse (13) ein Ersatzelement bildet;
- das Gehäuse (31) einen Außendurchmesser (d2) hat, der etwas größer als der Innendurchmesser (d1) des äußeren ringförmigen Körpers (12) ist, um mit ihm eine Übermaß-kraftschluss zu erreichen.

2. Stütze nach Anspruch 1, **dadurch gekennzeichnet, daß** der äußere ringförmige Körper (12), die innere Buchse (13) und das elastische Element (14) im Wesentlichen die gleiche axiale Länge (I) haben.

3. Stütze nach Anspruch 1, **dadurch gekennzeichnet, dass** der äußere ringförmige Körper (12) eine zylindrische Wand (15) hat, von der sich ein radialer Flansch (16) mit Löchern (17) zur Befestigung am Helikopterrahmen (F) erstreckt.

4. Stütze nach Anspruch 1, **dadurch gekennzeichnet, dass** die im Wesentlichen V-förmigen axialen Schlitze (19, 19'; 20, 20') eine im Wesentlichen konstante Dicke (s) im Bereich von 1 mm bis 3 mm und vorzugsweise nahe etwa 2 mm aufweisen.

5. Stütze nach Anspruch 1, **dadurch gekennzeichnet, dass** die Schlitze (19, 19'; 20, 20') abgeflachte oder leicht gewölbte Spitzen (21, 21'; 22, 22') haben, die somit parallel zu einer Außenfläche (13') der Innenbuchse (13) sind, und dazu nach außen gerichteten Schrägen (23, 23'; 24, 24') mit einem Öffnungswinkel (α) im Bereich von 90° bis 120° haben.

6. Stütze nach Anspruch 5, **dadurch gekennzeichnet, dass** die Spitzen (21, 21'; 22, 22') von der Außenfläche (13') der inneren Buchse (13) in einem konstanten Abstand beabstandet sind, der im Bereich von 4 mm bis 6 mm liegt, und die geneigten Abschnitte von einer äußeren Oberfläche (14') des elastischen Elements (14) in einem Abstand beabstandet sind, der im Bereich von 2 mm bis 3 mm liegt.

7. Stütze nach Anspruch 1, **dadurch gekennzeichnet, dass** sie mindestens zwei längliche Einsätze (30, 30') umfasst, die angepasst sind, um in ein Paar der diametral gegenüberliegenden Schlitze (19, 19'; 20, 20') eingeführt zu werden, um die elastische Konstante (K) des elastischen Elements (14) entlang einer der ersten diametralen Ebenen (π, π') zu erhöhen, die durch die Scheitel (21, 21'; 22, 22') der V-förmigen Profile der Schlitze (19, 19'; 20, 20') durchlaufen, wobei die Einsätze (30, 30') einen Querschnitt haben, der im wesentlichen komplementär zu dem Profil der Schlitze (19, 19'; 20, 20') ist.

8. Stütze nach Anspruch 7, **dadurch gekennzeichnet, dass** das Material der Einsätze (30, 30') aus der Gruppe ausgewählt ist, die Metalle oder Polymermaterialien wie HDPE (Polyethylen hoher Dichte) umfasst.

9. Stütze nach einem der Ansprüche 1 oder 5, **dadurch gekennzeichnet, dass** das Elastomermaterial des elastischen Elements (14) ein aushärtbarer Gummi ist, der aus der Gruppe ausgewählt ist, die NBR, HNBR und XNBR umfasst, mit einer Shore-A-Härte im Bereich von 70 bis 90, vorzugsweise nahe 80 ohne die Einsätze (30, 30') und im Bereich von 45 bis 60, vorzugsweise nahe 55 mit den Einsätzen (30, 30').

10. Stütze nach Anspruch 1, **dadurch gekennzeichnet, dass** die innere Buchse (13) einen inneren zylindrischen Hohlraum aufweist, dessen Größe den Durchgang von Schraubmitteln oder dergleichen zum Verbinden der Stütze (1) mit dem Getriebe (G) mittels Stangenpaaren (4).

11. System (2) zum Dämpfen von Schwingungen zwischen dem Rotor (R) und dem Rahmen (F) eines Hubschraubers (H), wobei der Rahmen (F) eine Längsachse (X), eine Querachse (Y) und eine Vertikale Achse (Z) definiert, die senkrecht zueinander stehen, und wobei der Rotor (R) einen Rotormast (M) umfasst, der über ein Getriebe (G) mit einem Motor verbunden ist, wobei der Mast (M) koaxial zu der vertikalen Achse (Z) mittels einer oberen Stütze (B) gehalten wird, die am Rahmen (F) befestigt ist, wobei das System (2) eine Gitterstruktur mit im wesentlichen horizontalen Stangen (4) zum Stützen des Getriebes (G) umfasst, **dadurch gekennzeichnet, dass** es mindestens ein Paar stoßdämpfender Stützen (1) nach einem oder mehreren der vorhergehenden Ansprüche zum Verbinden der Stangen (4) mit dem Getriebe (G) umfasst, so dass die zweiten diametralen Ebenen (p, p') der Stützen (1) im Wesentlichen parallel zur Längsachse (X) und der Querachse (Y) des Rahmens (F) verlaufen, um dadurch Längs-, Quer- und Torsionsbelastungen des Hubschraubers (H) im Wesentlichen zu dämpfen.

## Revendications

1. Support amortisseur (1) pour amortir les vibrations entre un rotor (R) d'un hélicoptère (H) et son châssis (F), dans lequel le rotor (R) comprend un mât de rotor (M) relié à un moteur via une transmission (G), ledit support (1) comprenant :
- un corps annulaire externe (12) définissant un axe central (L) et adapté pour être fixé au cadre (F) ;
- une douille interne (13) coaxiale audit corps annulaire externe (12) et adaptée pour être solidaire de la transmission (G) du rotor (R) ;
- un élément élastique sensiblement toroïdal (14) interposé entre ledit corps annulaire extérieur (12) et ladite douille intérieure (13), ledit élément élastique (14) étant réalisé en un matériau élastomère ayant une constante élastique prédéterminée (K);
dans lequel ledit élément élastique (14) comporte deux paires de fentes traversantes (19,19', 20, 20') sensiblement parallèles audit axe central (L), les fentes (19, 19'; 20, 20') de chaque paire étant diamétralement opposés et symétriques par rapport à deux premiers plans diamétraux (π, π") se coupant au niveau dudit axe central (L) ;
dans lequel lesdits premiers plans diamétraux (π, π') sont orthogonaux entre eux, lesdites fentes (19, 19'; 20, 20') ayant des sections transversales identiques;
lesdites fentes (19, 19'; 20, 20') étant dans des positions symétriques par rapport aux deuxièmes plans diamétraux (p, p') coupant ledit axe central (L) et tournées de 45° par rapport auxdits premiers plans diamétraux (π, π') de sorte que la constante élastique (K) dudit élément élastique (14) le long desdits deuxièmes plans diamétraux (p, p') est plus élevée que le long desdits premiers plans diamétraux (π, π'), **caractérisé par** :
- lesdites fentes ayant des sections transversales sensiblement en forme de V avec des sommets dirigés radialement vers ledit axe central (L) et passant par lesdits premiers plans diamétraux (π, π');
- ledit élément élastique (14) ayant une enveloppe extérieure en forme de feuille (31) et formant avec elle et avec la douille intérieure (13) un élément de remplacement;
- ledit carter (31) ayant un diamètre extérieur (d2) légèrement supérieur au diamètre intérieur (d1) dudit corps annulaire extérieur (12) pour s'emboîter à force avec celui-ci.

2. Support selon la revendication 1, **caractérisé en ce que** ledit corps annulaire extérieur (12), ladite douille intérieure (13) et ledit élément élastique (14) ont sensiblement la même longueur axiale (I).

3. Support selon la revendication 1, **caractérisé en ce que** ledit corps annulaire externe (12) a une paroi cylindrique (15) à partir de laquelle s'étend une bride radiale (16) avec des trous (17) pour la fixation au châssis de l'hélicoptère (F).

4. Support selon la revendication 1, **caractérisé en ce que** lesdites fentes axiales sensiblement en forme de V (19, 19' ; 20, 20') ont une épaisseur (s) sensiblement constante allant de 1 mm à 3 mm et de préférence voisine d'environ 2 mm.

5. Support selon la revendication 1, **caractérisé en ce que** lesdites fentes (19, 19'; 20, 20') ont des sommets aplatis ou légèrement arqués (21, 21'; 22, 22') qui sont ainsi parallèles à une surface externe (13') de ladite douille intérieure (13) et des sections inclinées (23, 23'; 24, 24') dirigées vers l'extérieur avec un angle d'ouverture (a) allant de 90° à 120°.

6. Support selon la revendication 5, **caractérisé en ce que** lesdits sommets (21, 21'; 22, 22') sont espacés de la surface extérieure (13') de ladite douille intérieure (13) à une distance constante qui va de 4 mm à 6 mm, et lesdites sections inclinées sont espacées d'une surface extérieure (14') dudit élément élastique (14) à une distance comprise entre 2 mm et 3 mm.

7. Support selon la revendication 1, **caractérisé en ce qu'**il comprend au moins deux inserts allongés (30, 30') adaptés pour être introduits dans une paire desdites fentes diamétralement opposées (19, 19'; 20, 20') pour augmenter la constante élastique (K) dudit élément élastique (14) le long d'un desdits premiers plans diamétraux (π, π') passant par les sommets (21, 21'; 22, 22') des profils en V desdites fentes (19, 19' ; 20, 20'), lesdits inserts (30, 30') ayant une section sensiblement complémentaire du profil desdites fentes (19, 19'; 20, 20').

8. Support selon la revendication 7, **caractérisé en ce que** le matériau desdits inserts (30, 30') est choisi dans le groupe comprenant les métaux ou les matériaux polymères tels que le HDPE (polyéthylène haute densité).

9. Support selon l'une des revendications 1 ou 5, **caractérisé en ce que** le matériau élastomère dudit élément élastique (14) est un caoutchouc durcissable choisi dans le groupe comprenant NBR, HNBR et XNBR, avec une dureté Shore A allant de 70 à 90, de préférence voisin de 80 sans lesdits inserts (30, 30') et allant de 45 à 60, de préférence voisin de 55 avec lesdits inserts (30, 30').

10. Support selon la revendication 1, **caractérisé en ce que** ladite douille intérieure (13) a une cavité cylindrique intérieure dont la taille permet le passage de moyens à vis ou similaires pour relier ledit support (1) à la transmission (G) au moyen de paires de tiges (4).

11. Système (2) d'amortissement des vibrations entre le rotor (R) et le châssis (F) d'un hélicoptère (H), dans lequel le châssis (F) définit un axe longitudinal (X), un axe transversal (Y) et un axe verticale (Z) perpendiculaires entre eux, et dans lequel le rotor (R) comprend un mât de rotor (M) relié à un moteur via une transmission (G), ledit mât (M) étant maintenu coaxial audit axe vertical (Z) au moyen d'un support supérieur (B) qui est solidaire du châssis (F), ledit système (2) comprenant une structure en treillis avec des tiges sensiblement horizontales (4) pour supporter la transmission (G), **caractérisé en ce qu'**il comprend au moins une paire de supports amortisseurs (1) selon une ou plusieurs des revendications précédentes pour relier lesdites tiges (4) à la transmission (G) de telle sorte que les deuxièmes plans diamétraux (p, p') desdits supports (1) seront sensiblement parallèles à l'axe longitudinal (X) et à l'axe transversal (Y) du châssis (F) respectivement, pour ainsi amortir des efforts sensiblement longitudinaux, transversaux et de torsion de l'hélicoptère (H).
